# EUROPÄISCHE PATENTSCHRIFT

(11) **EP 1 327 169 B1**
(45) Veröffentlichungstag und Bekanntmachung des Hinweises auf die Patenterteilung: **28.12.2005**
(21) Anmeldenummer: 01987890.9
(22) Anmeldetag: 17.10.2001
(51) Int. Cl.: G02B 6/00

(54) **STRAHLVERFOLGUNG IN HOCH MULTIMODALEN KANALWELLENLEITERN**
RAY TRACING IN HIGHLY MULTIMODAL CHANNEL WAVEGUIDES
SUIVI DE FAISCEAU DANS DES GUIDES D'ONDES A CANAL HAUTEMENT MULTIMODE

(30) Priorität: 17.10.2000 DE 10051405
(43) Veröffentlichungstag der Anmeldung: 16.07.2003
(73) Patentinhaber: SIEMENS AKTIENGESELLSCHAFT, 80333 München (DE)
(72) Erfinder: HIMMLER, Andreas, 33098 Paderborn (DE); BIERHOFF, Thomas, 34471 Volkmarsen (DE)
(86) Internationale Anmeldenummer: PCT/DE2001/003962
(87) Internationale Veröffentlichungsnummer: WO 2002/033455

(56) Entgegenhaltungen:
- BIERHOFF T ET AL: "RAY TRACING TECHNIQUE AND ITS VERIFICATION FOR THE ANALYSIS OF HIGHLY MULTIMODE OPTICAL WAVEGUIDES WITH ROUGH SURFACES" IEEE TRANSACTIONS ON MAGNETICS, IEEE INC. NEW YORK, US, Bd. 5, PART 1, Nr. 37, 4. Juni 2000 (2000-06-04), Seiten 3307-3310, XP001089831 ISSN: 0018-9464
- BIERHOFF T, ET AL.: "An Approach to Model Wave Propagation in Highly Multimodal Optical Waveguides with Rough Surfaces" PROCEEDINGS OF THE X.INTERNATIONAL SYMPOSIUM ON THEORETICAL ELECTRICAL ENGINEERING, 1999, Seiten 515-520, XP008005522 Magdeburg, DE
- HIMMLER A ET AL: "MODELING OF HIGHLY MULTIMODAL OPTICAL INTERCONNECTS FOR TIME DOMAIN ANALYSIS" DIGEST IEEE/LEOS SUMMER TOPICAL MEETINGS, XX, XX, 24. Juli 2000 (2000-07-24), Seiten 43-44, XP001089830

## Beschreibung

### Technisches Gebiet

Die Erfindung betrifft ein Programmierverfahren für die Strahlverfolgung in hoch multimodalen Kanalwellenleitern.

### Stand der Technik

Zur Berechnung der Strahlausbreitung in dielektrischen Kanalwellenleitern, insbesondere Lichtleitern, stehen bislang wellenoptische Analysemethoden wie die Methode der finiten Elemente (FEM) oder die 'Beam Propagation Method' (BPM) zur Verfügung. Diese sind jedoch nur dann effizient einsetzbar, wenn nur eine oder wenige Moden zu berücksichtigen sind und der Querschnitt der Wellenleiter, bezogen auf die optische Wellenlänge, nicht allzu groß ist.

Für multimodale Stufenindex-Wellenleiter, bei denen der Querschnitt wesentlich größer als die Wellenlänge der verwendeten Strahlung ist, sind hingegen Strahlverfolgungen auf der Basis geometrischer Optik effizient möglich.

Hierbei wird (in der Simulation) ein einzelner Strahl vorgegebener Richtung und Polarisation in den Wellenleiter eingekoppelt. Dieser tritt entweder direkt am Ende des Wellenleiters aus oder wird an der Wand des optischen Kanals, d.h. der Grenzfläche des Indexsprungs, gebrochen.

Dabei teilt sich die eintreffende Strahlung in Komponenten auf: einen reflektierten Hauptstrahl, einen transmittierten Hauptstrahl, eine Anzahl von reflektierten Streustrahlen und eine Anzahl von transmittierten Streustrahlen. Die transmittierten Anteile sind für die weitere Strahlverfolgung ohne Belang; lediglich ihr Energieanteil geht den reflektierten Strahlen verloren.

Eine einfache Simulation berücksichtigt lediglich den reflektierten Hauptstrahl, d.h. die Reflexion nullter Ordnung, und verfolgt dessen weitere Reflexion bis zur Austrittsfläche. Damit kann durch individuelle Verfolgung einer größeren Anzahl von Strahlen, die der Charakteristik des Senders entsprechen, das Strahlenbündel am Ausgang des Wellenleiters bestimmt werden. Diese Methode ist ausreichend, wenn die Reflexionen nahezu ideal sind, weil die Wandung sehr glatt ist.

Ist jedoch die Wandung nicht glatt, so führt die genannte Methode zu Ergebnissen, die entsprechenden Messungen nur schlecht entsprechen. Die Berücksichtigung der reflektierten Streustrahlung jedoch führt zu einem Rechenaufwand, der exponentiell mit der Anzahl der Reflexionen steigt.

Aufgabe der Erfindung ist es daher, eine Methode anzugeben, bei der auch die Streustrahlung berücksichtigt wird, dessen Rechenaufwand aber allenfalls quadratisch mit der Anzahl der Reflexionen steigt.

Die Erfindung löst diese Aufgabe, indem sie zwischen Primär- und Sekundärstrahlen unterscheidet und bei Sekundärstrahlen nur noch Reflexionen nullter Ordnung berücksichtigt.

Es handelt sich um ein Verfahren gemäß Anspruch 1 zur rechnerischen Bestimmung optischer Eigenschaften eines Kanalwellenleiters, bei dem für einen in eine Eintrittsfläche einfallenden Strahl die Intensitätsverteilung über eine Austrittsfläche durch aneinander anschließende, sich möglicherweise aufteilende Teilstrahlen bestimmt wird. Aus einem auf die Mantelfläche fallenden Teilstrahl wird durch einen vorgegebenen Algorithmus eine reflektierter Hauptstrahl und, sofern nach dem folgenden Ablauf erforderlich, eine Anzahl von Streustrahlen höherer Ordnung bestimmt, die ihrerseits Teilstrahlen darstellen und rekursiv weiterverfolgt werden. Jeder Teilstrahl ist entweder ein Primärstrahl oder ein Sekundärstrahl. Wenn der einfallende Teilstrahl ein Primärstrahl ist, ist der reflektierte Hauptstrahl wieder ein Primärstrahl und die Streustrahlen sind Sekundärstrahlen. Bei der Reflexion eines Sekundärstrahls wird nur der reflektierte Hauptstrahl als Sekundärstrahl berücksichtigt.

### Kurzbeschreibung der Zeichnungen

Es zeigen
- Fig. 1: eine zweidimensionale Darstellung eines Modells der Strahlverfolgung bei einem Kanalwellenleiter mit rauher Oberfläche,
- Fig. 2: eine zweidimensionale Darstellung, reduziert auf die in der Erfindung verwendeten Teilstrahlen.

### Beschreibung einer Ausführungsform der Erfindung

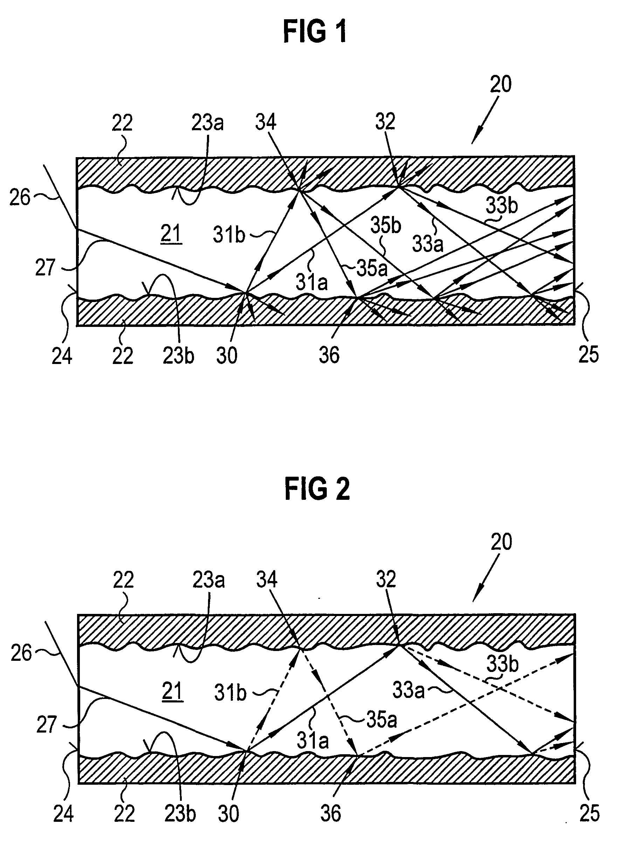

Fig. 1 zeigt eine zweidimensionale Darstellung zur Erläuterung des bisher verwendeten Verfahrens, wie es in dem Artikel "An Efficient Monte Carlo Based Ray Tracing Technique for the Characterization of Highly Multimode Dielectric Waveguides with Rough Surfaces" von Th. Bierhoff et al., Proc. 30th European Microwave Conference, Vol.1 pp 378-381, Paris,3rd-5th October 2000, beschrieben ist.

In Fig. 1 ist ein Längsschnitt durch einen Kanalwellenleiter 20 skizziert, der einen Kern 21 und eine Umhüllung 22, auch als 'cladding' bezeichnet, hat. Der (nicht gezeigte) Querschnitt kann rund oder rechteckig sein. Andere Querschnitte sind gleichfalls verwendbar, aber weniger praktisch in der Herstellung. Es handelt sich um einen Stufenindex-Wellenleiter, weil ein relativ scharfer Übergang zwischen dem Kern 21 und der Umhüllung 22 vorhanden ist, so daß eine Stufe im Brechungsindex entsteht, wobei bekanntermaßen der Brechungsindex des Kerns 21 größer ist als der der Umhüllung 22. Dadurch entstehen Grenzflächen 23a und 23b, an denen ein Strahl im Kern 21, der auf die Grenzfläche trifft, reflektiert wird. Die Grenzflächen sind hier gewellt dargestellt, um anzudeuten, daß eine Oberflächenrauhigkeit von Bedeutung ist; in dem behandelten Verfahren werden sie jedoch zunächst als Ebenen oder sonstige einfach, insbesondere analytisch zu beschreibende Flächen angenommen.

Der Kanalwellenleiter hat eine Eintrittsfläche 24 und eine Austrittsfläche 25. In die Eintrittsfläche 24 fällt ein (Licht-) Strahl 26, der an der Eintrittsfläche 24 gebrochen wird und als Eingangsstrahl 27 fortgesetzt wird. Ob und wie groß die Brechung ist, hängt von der Art und dem Medium der Ankopplung ab; für das weitere Vorgehen ist lediglich der Eingangsstrahl 27 von Bedeutung. Dieser erreicht die Grenzfläche 23b an einem ersten Reflexionspunkt 30 und wird dort gebrochen und reflektiert.

Die Berechnung eines solchen Strahlengangs mit den Mitteln der geometrischen Optik ist weithin bekannt. Hat der Kanalwellenleiter rechteckigen Querschnitt, dann sind die Grenzflächen 23a, 23b wiederum rechteckig, so daß bei gegebener Gerade für den Eingangsstrahl 27 der Schnittpunkt der Geraden mit einer der Grenzflächen, hier der Grenzfläche 23b, mit den bekannten Methoden der analytischen Geometrie bestimmt werden kann. Ist der Querschnitt rund, so ist die Grenzfläche 23a, 23b ein Zylinder, zu dem der Schnittpunkt auch noch einfach berechnet werden kann. Gegebenenfalls muß bei ungewöhnlichen oder variablen Querschnitten auf iterative numerische Methoden zurückgegriffen werden.

Die Fortsetzung des am ersten Reflexionspunkt 30 eintreffenden Eingangsstrahls 27 richtet sich nach den Parametern der Simulation. Danach wird die Intensität und die Richtung des direkt reflektierten Strahls 31a bestimmt. Die Richtung richtet sich nach der Tangente der idealisierten Grenzfläche 23b, die als rauh angesehen wird. Ferner werden diffuse Streustrahlen bestimmt, die in Fig. 2 durch einen einzigen Streustrahl 31b repräsentiert werden. Hierbei wird ein Raumwinkel, in dem Streustrahlung kontinuierlich vorhanden ist, zu einem einzigen Strahl in der Modellierung zusammengefaßt. Der Streustrahl 31b repräsentiert damit die Streustrahlung in einem gegebenen Raumwinkel, die durch eine ebene Welle mit definierter Polarisation transportiert wird; für benachbarte Raumwinkel werden entsprechend weitere Streustrahlen bestimmt, die auf gleiche Art weiter behandelt werden, aber der Übersichtlichkeit halber nicht dargestellt sind. Gleichfalls angedeutet durch Pfeile sind ein gebrochener Primärstrahl und ein gebrochener Streustrahl. Deren weiterer Weg ist ohne Bedeutung; lediglich ist festzuhalten, daß die Summe aller Intensitäten gleich der des eintreffenden Eingangsstrahls 27 sein muß.

Der direkt reflektierte Hauptstrahl 31a trifft an der Stelle 32 wieder auf eine Grenzfläche, hier die Grenzfläche 23a, und wird dort zu einem reflektierten Hauptstrahl 33a und mehreren reflektierten Nebenstrahlen 33b, von denen wieder nur einer dargestellt ist. Die transmittierten Strahlen werden wieder nur ihrem Anteil nach berücksichtigt.

Entsprechend trifft der reflektierte Streustrahl an der Stelle 36 auf die Grenzfläche 23b und ergibt einen Hauptstrahl und mehrere Streustrahlen.

Ersichtlich ist dieses Verhalten von der Struktur durch rekursive Verfahren relativ einfach programmierbar. Es ist jedoch auch sofort ersichtlich, daß insbesondere bei mehreren Streustrahlen die Anzahl der Strahlen exponentiell steigt. Dabei werden Strahlen, deren Intensität unter einer vorgegebenen Schwelle liegen, natürlich nicht weiter berücksichtigt. Man muß jedoch feststellen, daß entweder die Schwelle so hoch liegt, daß die Ergebnisse nicht gut genug sind, oder zuviel Rechenzeit benötigt wird.

In dem genannten Artikel wird daher vorgeschlagen, die Komplexität durch Anwendung der Monte-Carlo-Methode zu reduzieren. Diese allgemein bekannte Methode wählt durch einen Zufallsmechanismus einen der Streustrahlen aus und ignoriert die anderen. Es ergab sich zwar eine Reduktion der Rechenzeit, aber insgesamt noch keine einfache, schnelle und problemlos benutzbare Lösung.

Durch die Erfindung kann auf die Monte-Carlo-Methode verzichtet werden und ein wesentlich besseres Ergebnis in Relation zum Rechenaufwand erreicht werden. Dabei werden alle nach dem Modell der Reflexion entstehenden Streustrahlen weiterverfolgt und nicht nur einige zufällig ausgewählte. Für diese Streustrahlen jedoch wird bei nachfolgenden Reflexionen nur noch der Hauptstrahl berücksichtigt. Dabei wird jedesmal das Modell der Reflexion berechnet, um die Intensität des Hauptstrahls zu ermitteln; es wird also nicht unbedingt ein einfaches Spiegelmodell für diese Nebenstrahlen eingesetzt.

Dies wird erreicht, indem zu jedem zu verfolgenden Strahl zusätzlich ein Generationsindex mitgeführt wird, der angibt, ob es sich um einen Primärstrahl oder einen Sekundärstrahl handelt. Bevorzugt wird hierzu eine ganze Zahl benutzt, die Null für einen Primärstrahl und größer Null für einen Sekundärstrahl ist.

Dies ist in Fig. 2 skizziert. Die transmittierten Anteile wurden ohnehin nicht mehr dargestellt. Aber auch die von dem sekundären Streustrahl 31b bewirkten sekundären Streustrahlen werden gar nicht mehr weiterverfolgt. Hingegen wird der sekundäre Teilstrahl 33b als von einem primären Teilstrahl 31a bei der Reflexion 32 ausgehend weiterhin berücksichtigt.

Bei der einfachen, bislang beschriebenen Ausführung wird lediglich ein binärer Generationsindex benutzt bzw, nur zwischen Primär- und Sekundärstrahlen unterschieden. Es ist jedoch auch möglich, die Simulation zu verbessern, indem der Generationsindex als ganze Zahl ausgenutzt wird. Dabei bleibt der Generationsindex bei dem Hauptstrahl einer Reflexion, d.h. der Reflexion nullter Ordnung, gleich. Bei Streustrahlen, d.h. Reflexionen höherer Ordnung, wird die Ordnungsnummer zu dem Generationsindex addiert. Ob ein Strahl weiterverfolgt wird, wird dann über einen Schwellwert für den Generationsindex entschieden. In dem oben genannten einfachen Beispiel werden überhaupt nur Reflexionen erster Ordnung berücksichtigt, und der Schwellwert ist Eins.

Durch den Gewinn an Effizienz konnte bei der Reflexion auch die Polarisation berücksichtigt werden, was bei der aufgeführten Monte-Carlo-Methode ignoriert werden mußte.

## Patentansprüche

1. Programmierverfahren für die Strahlverfolgung zur rechnerischen Bestimmung optischer Eigenschaften eines Stufenindex-Kanalwellenleiters (20) mit einer Mantelfläche, wobei für einen in eine Eintrittsfläche (24) einfallenden Strahl(26, 27) die resultierenden Strahlverteilung über eine Austrittsfläche (25) bestimmt wird, mit den Merkmalen:
- zu einem auf die Mantelfläche (23a, 23b) fallenden Teilstrahl (31a, 31b, 33a, 33b, 35a, 35b) wird durch einen vorgegebenen Algorithmus ein reflektierter Hauptstrahl (31a, 33a, 35a) der Ordnungszahl Null und eine Anzahl von Streustrahlen (31b, 33b, 35b) mit einer Ordnungszahl größer Null bestimmt, die ihrerseits Teilstrahlen darstellen und rekursiv weiterverfolgt werden,
- der einfallende Strahl (27) ist der erste Teilstrahl;
**dadurch gekennzeichnet, daß**
- jedem Teilstrahl ein Generationsindex zugeordnet ist,
- der einfallende Strahl den Generationsindex Null hat,
- bei der Reflexion der Generationsindex eines reflektierten Teilstrahls gleich dem um die Ordnungszahl der Reflexion erhöhten Generationsindex des einfallenden Teilstrahls ist,
- nur solche Teilstrahlen weiterverfolgt werden, deren Generationsindex eine vorgegebene von Null verschiedene Schranke nicht überschreitet.

2. Verfahren nach Anspruch 1, wobei die vorgegebene Schranke gleich Eins ist und bei der Berechnung der Reflexion allenfalls nur Streustrahlen der Ordnungszahl Eins anfallen.

## Claims

1. Programming method for ray tracing for the computational determination of optical properties of a step index channel waveguide (20) with an outer surface, with the resulting ray distribution being determined for an incident ray (26, 27) striking an entrance surface (24) over an emergence surface (25) with the features:
- a reflected main ray (31a, 33a, 35a,) of order zero and a number of scattered rays (31b, 33b, 35b) with an order greater than zero, which in turn depict partial rays and are recursively further traced, are determined in respect of an incident partial ray (31a, 31b, 33a, 33b, 35a, 35b) striking the outer surface (23a, 23b),
- the incident ray (27) is the first partial ray,
**characterised in that**
- a generation index is assigned to each partial ray,
- the incident ray has the generation index zero,
- during reflection the generation index of a reflected partial ray is equal to the generation index of the incident partial ray increased by the order of the reflection,
- only those partial rays are further traced, the generation index of which does not exceed a predetermined threshold that is not zero.

2. Method according to claim 1, with the predetermined threshold being equal to one and only scattered rays of order one being used in the calculation of the reflection.

## Revendications

1. Procédé de programmation pour le suivi de faisceau pour déterminer par calcul les propriétés optiques d'un guide d'ondes (20) en canal à saut d'indice doté d'une surface d'enveloppe, dans lequel, pour un faisceau (26, 27) incident dans une surface d'entrée (24), on détermine la répartition résultante des faisceaux à travers une surface de sortie (25), lequel procédé présente les caractéristiques suivantes :
- pour un faisceau partiel (31a, 31b, 33a, 33b, 35a, 35b) incident sur la surface d'enveloppe (23a, 23b), on détermine par un algorithme prédéterminé un faisceau principal réfléchi (31a, 33a, 35a) d'ordre zéro et un certain nombre de faisceaux diffus (31b, 33b, 35b) d'un ordre plus grand que zéro, qui représentent eux-mêmes des faisceaux partiels et sont suivis plus loin de manière récursive,
- le faisceau incident (27) est le premier faisceau partiel,
**caractérisé en ce que**
- à chaque faisceau partiel, on associe un indice de création,
- le faisceau incident a zéro pour indice de création,
- lors de la réflexion, l'indice de création d'un faisceau partiel réfléchi est égal à l'indice de création du faisceau partiel incident additionné du numéro d'ordre de la réflexion, et
- on ne suit que les faisceaux partiels dont l'indice de création ne dépasse pas un seuil prédéterminé différent de zéro.

2. Procédé selon la revendication 1, dans lequel le seuil prédéterminé est égal à un et dans lequel, dans le calcul de la réflexion, seul les faisceaux diffus de numéro d'ordre un sont en tout cas inclus.
